# EUROPEAN PATENT SPECIFICATION

(11) **EP 2 645 397 B1**
(45) Date of publication and mention of the grant of the patent: **06.05.2020**
(21) Application number: 11843351.5
(22) Date of filing: 17.03.2011
(51) Int. Cl.: H01H 35/00, G01V 8/20

(54) **ANCHORING STRUCTURE OF MULTI-OPTICAL AXIS PHOTOELECTRIC SENSOR**
VERANKERUNGSSTRUKTUR EINES FOTOELEKTRISCHEN SENSORS MIT MEHREREN OPTISCHEN ACHSEN
STRUCTURE D'ANCRAGE POUR CAPTEUR PHOTOÉLECTRIQUE À AXES OPTIQUES MULTIPLES

(30) Priority: 22.11.2010 JP 2010259994
(43) Date of publication of application: 02.10.2013
(73) Proprietor: Omron Corporation, Kyoto-shi, Kyoto 600-8530 (JP)
(72) Inventor: KUDO, Junya, Kyoto-shi, Kyoto 600-8530 (JP); TAKAHARA, Takayoshi, Kyoto-shi, Kyoto 600-8530 (JP); OSAKO, Kazunori, Kyoto-shi, Kyoto 600-8530 (JP); SATO, Toshinori, Kyoto-shi, Kyoto 600-8530 (JP); NAKANO, Koyuru, Kyoto-shi, Kyoto 600-8530 (JP); TAKIGUCHI, Nobuchika, Kyoto-shi, Kyoto 600-8530 (JP)
(74) Representative: Horn Kleimann Waitzhofer Patentanwälte PartG mbB
(86) International application number: PCT/JP2011/056350
(87) International publication number: WO 2012/070258

(56) References cited:
- JP-A- 2003 242 868
- JP-A- 2006 107 777
- JP-A- 2006 107 777
- JP-A- 2006 128 086
- JP-A- 2006 128 086
- JP-A- 2008 091 171
- JP-A- 2008 091 171
- US-A1- 2003 106 992

## Description

### TECHNICAL FIELD

The present invention relates to an anchoring structure to anchor a columnar housing making bodies of a projector and an optical receiver of a multiple-optical-axis photoelectric sensor to a support member at a field site where the sensor is installed.

### BACKGROUND ART

A projector and an optical receiver of a multiple-optical-axis photoelectric sensor are configured so that an optical unit in which a plurality of optical elements (light-emitting elements or light-receiving elements) are disposed, and a control board are housed inside a columnar housing, and is equipped at an exit/entrance to a dangerous area to be used.

The housing of the projector and the optical receiver is anchored to a wall body on a site (a lateral plate of equipment in a field site may be the wall body), a rail member or the like through a fixture attached to the housing. As a structure of the anchoring when the housing is attached to the wall body, for example, in Patent Document 1, there has been disclosed an anchoring structure in which a rail-like projection is provided along a longitudinal direction on a lateral face of the housing, and the rail-like projection is inserted and sandwiched between paired hook members of the fixture to thereby attach the fixture to the housing and screw the fixture to the wall body or the like.

As to the fixture to anchor another member to the rail member, in Patent Document 2, there has been disclosed a bolt for anchoring made up of a head portion having a parallelogram cross section, and a leg portion. This bolt for anchoring is inserted into a rail depression so that a longitudinal direction of the head portion is aligned with a direction of the rail depression, and the leg portion is rotated at an arbitrary position inside the depression, which brings about a state where the head portion is engaged with the rail depression. Under this state, a metal fitting for linkage to the other member is anchored to the leg portion projected from the rail depression.

US 2003/106992 A1 discloses a multi-beam photoelectric sensor mount with means for adjusting the sensor housing in rotational angular position about the lengthwise axis thereof, as well as adjusting the sensor housing in the lengthwise direction. Said mount comprises an anchoring fixture attached to both lateral sides of the sensor housing while supporting its rear side.

JP 2006 107777 A discloses a support fitting for a multiple optical-axis photoelectric sensor. In particular, a side-face support fitting is structured of a base bracket and a pinching unit. The pinching unit is composed of a fixed-side pinching part having a first pinching piece and a movable-side pinching part having a second pinching piece. The movable-side pinching part is fixed by fastening a fixing screw to a clamping seat formed at the fixed-side pinching part, for which a guiding slope is formed on the top face of a screw-rest seat into which the fixing screw is inserted. Hence, when the fixing screw is fastened, the movable-side pinching part moves towards a direction to make the both pinching pieces come closer to each other to pinch the main body case.

### Citation List

### Patent Document

Patent Document 1: Japanese Unexamined Patent Publication No. 2006-128086
Patent Document 2: Japanese Unexamined Patent Publication No. H11-141511

### SUMMARY OF THE INVENTION

### PROBLEMS TO BE SOLVED BY THE INVENTION

When the housing of the multiple-optical-axis photoelectric sensor is attached to the rail member, the principle described in Patent Document 2 is also applied. As a specific method, there is a method in which a first-in nut is inserted into the depression of the rail member to be temporarily tightened at a desired position, and an attachment piece of the fixture attached to the housing is sandwiched and fixed between the nut in the depression and the bolt for anchoring. Moreover, there is also a method in which a holdback is linked with the fixture attached to the housing to lift the fixture and the holdback together with the whole housing up to an upper portion of the rail member, a nut of the holdback is inserted into the depression and is slid to a desired position together with the fixture and the housing, and then the holdback is anchored.

However, in the former method, there is a possibility that when the fixture is linked with the holdback, the nut in the depression is dropped, and it is also difficult to adjust the position of the housing with respect to the rail member. The latter method is hard to carry out when the housing is long, and when the housing is attached to the high rail member. In the latter method as well, there is a possibility that the nut comes off, or that misalignment of the housing is caused during the work. Moreover, when the housing is attached to the wall body, there has also been a demand to reduce efforts taken to adjust the position of the housing and anchor the housing.

The present invention focuses attention on the above-described problems, and an object thereof is to provide a structure enabling a housing to be easily anchored to a support member, by which efficiency of attachment work of a housing is increased.

### MEANS FOR SOLVING THE PROBLEMS

An anchoring structure of a multiple-optical-axis photoelectric sensor according to the present invention includes a fixture to be attached to a housing of a projector or an optical receiver in a state supporting a rear face and one lateral face of the housing, a first guide part provided along a lateral edge on a rear face side of the lateral face of the housing, the lateral face being supported by the fixture, a second guide part provided along a lateral edge of the rear face of the housing closer to the lateral face having the first guide part, and a holdback to be anchored to a support member. An engagement part to be engaged with the first guide part is provided at a portion of the fixture supporting the one lateral face of the housing. Moreover, at a portion of the fixture supporting the rear face of the housing, a protruding linear stage part is provided, the linear stage part extending along a longitudinal direction of the housing supported by this portion and abutting on the second guide part, and at positions opposed along the longitudinal direction of the housing with the portion supporting the rear face of the housing interposed, attachment pieces to be each engaged with the holdback are provided.

Furthermore, the engagement part is engaged with the first guide part of the housing, and the linear stage part is caused to abut on the second guide part of the housing, by which the fixture is slidably attached to the housing along the longitudinal direction.

The engagement part in the one lateral face is engaged with the first guide part, and the linear stage part is caused to abut on the second guide part on the rear face side of the housing, by which the fixture is attached to the housing in a state supporting the rear face and the one lateral face of the housing. Moreover, when this fixture is pushed or slightly pulled along the longitudinal direction of the housing, the engagement part is guided by the first guide part, and the linear stage part is guided by the second guide part, respectively, which allows the entire fixture to slide along the longitudinal direction of the housing.

Accordingly, the holdback is beforehand anchored to the support member (a rail member, a wall body or the like) at a field site (only a part of holdback such as a slide nut may be anchored), and the housing to which the fixture is attached is aligned with the support member to adjust a height thereof, and then, the fixture is slid up to a position where the attachment piece corresponds to the holdback, so that the fixture can be linked with the holdback. In this manner, since after the holdback or a part thereof is firmly anchored, the fixture is slid to the position to link both, the holdback can be prevented from coming off the support member during attachment work. Moreover, alignment of the housing with the support member, and alignment between the fixture and the holdback can be easily performed.

Moreover, since the paired attachment pieces opposed along the longitudinal direction of the housing with the portion supporting the housing interposed are provided, the fixture can be slid to a direction where the fixture approaches the holdback to link the fixture and the holdback, on whichever side the corresponding fixture is disposed with respect to the holdback on the support member.

In one aspect of the above-described anchoring structure, a depression extending along the lateral edge of the lateral face of the housing is the first guide part, and a hook part having a shape fitting in this depression is the engagement part. According to this configuration, the linear stage part of the fixture is aligned with the second guide part in a bottom face of the housing, and the hook part is fitted in the depression of the lateral face of the housing, by which attachment of the fixture to the housing can be completed, which makes the attachment work of the fixture easy.

However, the forms of the first guide part and the engagement part are not limited to the foregoing. For example, a rail-like projection (protrusion) as described in Patent Document 1 may be the first guide part, and paired hook parts sandwiching this rail, or a recessed part having a shape fitting on the protrusion may be the engagement part.

In one preferred embodiment regarding the second guide part, a protrusion extending along the lateral edge of the rear face of the housing closer to the lateral face having the first guide part is the second guide part. In this case, the linear stage part abuts on an inner wall face of the protrusion.

According to this embodiment, of wall faces on both sides of the linear stage part, the wall face opposed to the lateral edge closer to the first guide part makes contact with the second guide part, while the other wall face can be in an open state. Thus, a frictional force between the linear stage part and the rear face of the housing when a pressing force along the longitudinal direction of the housing is applied to the fixture is made smaller, thereby enabling the fixture to be slid smoothly.

In another preferred embodiment, a screw hole toward a rear face side is formed in a front face of the portion of the fixture supporting the one lateral face of the housing, and a screw inserted into this screw hole is tightened, by which the engagement part is pushed to the first guide part to restrict movement of the engagement part.

According to this embodiment, the screw is tightened after the fixture is linked with the holdback, which can make the engagement state between the housing and the fixture robust, and enables the housing to be stably supported.

In another preferred embodiment, the holdback has an anchoring member exposed on a surface of the support member, and a nut to anchor this anchoring member to the support member. Each of the attachment pieces of the fixture has an open portion to insert the anchoring member at a leading end thereof, and sandwiches the anchoring member inserted from this open portion to support the same. Furthermore, in a front face of the portion of the fixture supporting the one lateral face of the housing, a screw hole toward a rear face side is formed, and a screw inserted into this screw hole is tightened, by which the engagement part is pushed to the first guide part to restrict movement of the engagement part.

According to the above-described embodiment, the fixture is slid until the holdback is inserted into the open portion of the attachment piece, and further, the fixture is slid until the state where the holdback is pushed into a base end portion of the attachment piece, by which the fixture can be linked with the attachment piece. This can make the linkage work of the fixture with the holdback easier.

Furthermore, after this linkage, the screw at the portion supporting the lateral face of the housing is tightened, by which the engagement part to be engaged with the first guide part is pressed from a front face side (a front side of the housing) to be pushed to the first guide part, thereby increasing the frictional force between both and restricting the movement of the engagement part. Since this makes the fixture unslidable, so that the fixture is anchored to the housing and the holdback, the holdback can be prevented from coming off the attachment piece of the fixture, and the engagement state between the housing and the fixture can be made robust. Thus, the housing can be stably anchored to the support member.

In another preferred embodiment, the fixture has a base member including the attachment pieces, a support member including the portion supporting the rear face of the housing, and an engagement member including the engagement part. At a portion of the support member supporting the rear face of the housing, a rising part that rises outside the one lateral face of the housing supported by the relevant portion is continued, the engagement member is linked with the support member through the screw in a state where the engagement member covers a surface of the rising part.

While the fixture described in previous Patent Document 1 is made up of a total of four components of the base member, the two hook members anchored to the housing in the state supported on the base member, and the anchoring member for anchoring a linked body of the hook members to the base member, in the above-described embodiment, the components are reduced in number, assembling of the fixture is easier, and costs are reduced. Moreover, by a linked body of the support member and the engagement member, the rear face and the one lateral face of the housing can be supported in a stable state.

In the present invention, it is desirable that at least the two fixtures are attached to the housing, and that the same number of holdbacks as that of fixtures are anchored to the support member, and each of the fixtures is anchored to each of the holdbacks.

Moreover, the first guide part is not limited to provision in the one lateral face of the housing, but may be provided in both lateral faces, and in this case, the second guide parts are also formed along on both lateral edges of the rear face of the housing. This enables selection as to which of the lateral faces of the housing is supported by the fixture in accordance with a situation of the field site, thereby increasing convenience.

### EFFECT OF THE INVENTION

According to the present invention, since the attachment work can be performed in a state where the holdback can be firmly anchored to the rail depression of the rail member, there is no risk that the holdback comes off the rail depression. Moreover, the work of aligning the housing of the sensor with the rail member after anchoring the holdback, and sliding the fixture toward the holdback enables the fixture and the holdback to be aligned and linked with each other, and thus, the work to anchor the housing to the rail member becomes easier, and work efficiency can be increased.

### BRIEF DESCRIPTION OF THE DRAWINGS

Fig. 1 is a perspective view showing an exterior appearance of a multiple-optical-axis photoelectric sensor to which the present invention is applied.
Fig. 2 is a perspective view showing an example in which a housing of the sensor is attached to a rail member.
Fig. 3 is a perspective view showing an anchoring state of holdbacks to a rail.
Fig. 4 is a perspective view showing a configuration of a fixture.
Fig. 5 is a perspective view showing the configuration of the fixture.
Fig. 6 is a perspective view showing the configuration of the fixture.
Fig. 7 is a front view showing a configuration on a front side of a slide member.
Fig. 8 is a perspective view showing a configuration on a back side of the slide member.
Fig. 9 is a perspective view showing a configuration on a front side of a base member.
Fig. 10 is a front view showing a configuration on the front side of the base member.
Fig. 11 is a view showing an anchoring state of the fixture to the housing, and an engagement state between an anchoring part and the holdback.
Fig. 12 is a perspective view showing an exterior appearance of the holdback.
Fig. 13 is a view when an attachment state of the fixture to the rail is seen from an end edge side of the rail.
Fig. 14 is a perspective view showing a state where the housing is aligned with the rail member, and the fixture is misaligned from the holdback.
Fig. 15 is a side view showing an example of a holdback for anchoring to a wall body.
Fig. 16 is a perspective view showing an example in which alignment is performed to attach the housing of the sensor to the wall body.
Fig. 17 is a perspective view showing a state where the attachment of the housing to the wall body is completed.
Fig. 18 is a view showing another configuration example of the attachment piece and the holdback.
Fig. 19 is a view showing another configuration example of the attachment piece and the holdback.

### MODE FOR CARRYING OUT THE INVENTION

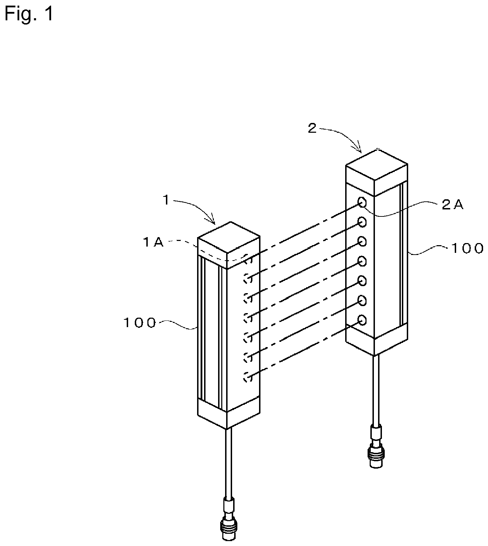

Fig. 1 shows an exterior appearance of a multiple-optical-axis photoelectric sensor.

This multiple-optical-axis photoelectric sensor is a sensor for purpose of safety, which is installed in a factory or the like, and is made up of a pair of a projector 1 and an optical receiver 2. The projector 1 and the optical receiver 2 each have a columnar housing 100 as a body, and are disposed so as to be opposed to each other at a predetermined distance.

Inside each of the housings 100, a plurality of optical elements (in the projector 1, light emitting elements 1A, and in the optical receiver 2, light receiving elements 2A), a control board (not shown) and the like are housed. Optical axes of the light emitting elements 1A and the light receiving elements 2A are aligned in a one-to-one relation, by which a two-dimensional sensing area is set between the projector 1 and the optical receiver 2.

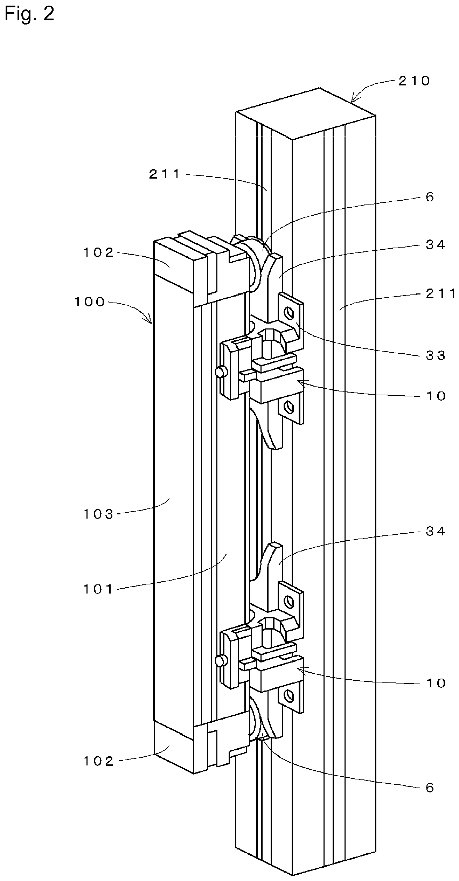

Fig. 2 shows an attachment example of the housing 100. This housing 100 has a configuration in which caps 102, 102 are assembled to respective end faces of a metal frame 101 whose front face and both end faces are opened, and a light transmissive plate 103 is assembled to the front face of the frame 101, respectively.

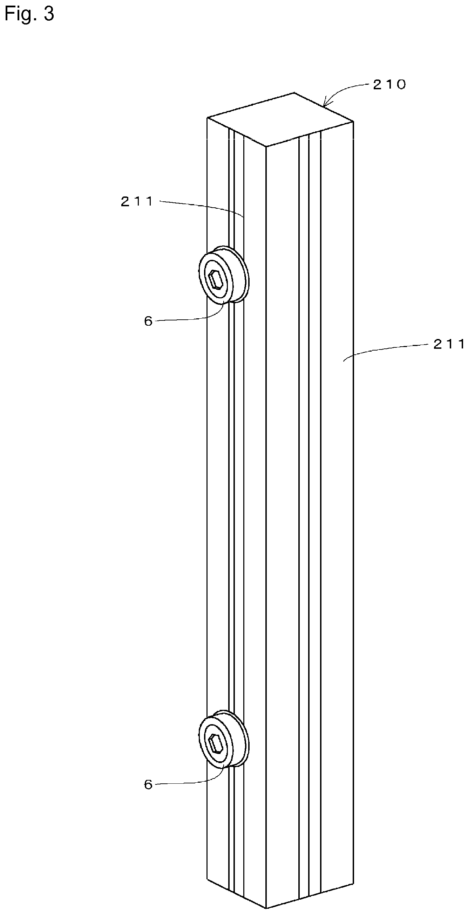

In the attachment example shown in Fig. 2, an aluminum rectangular columnar frame 210 in which rails 211 are formed in respective faces thereof is an attachment object. Fixtures 10 are attached to upper and lower portions of the frame 101 of the housing 100, respectively. Paired holdbacks 6, 6 are beforehand anchored to the rail 211 in one of the faces of the rectangular columnar frame 210, as shown in Fig. 3. The fixtures 10, 10 are linked with these holdbacks 6, 6, which brings about a state where the housing 100 is anchored to the one face of the rectangular columnar frame 210.

The rectangular columnar frame 210 is not necessarily installed in an upright state, but may be installed at a predetermined height position with a longitudinal direction set horizontally. Moreover, the anchoring by the fixtures 10 are not limited to two positions, and in accordance with a length of the housing 100, the fixtures 10 may be attached at three or more positions to anchor the housing 100.

The respective fixtures 10 are attached in a range of a rear face to one lateral face of the housing 100 to support the housing 100 in a state rotatable around an axis along the longitudinal direction. Work of tightening a screw 39 (not shown in Fig. 2) described later enables the housing 100 to be anchored in a non-rotational state.

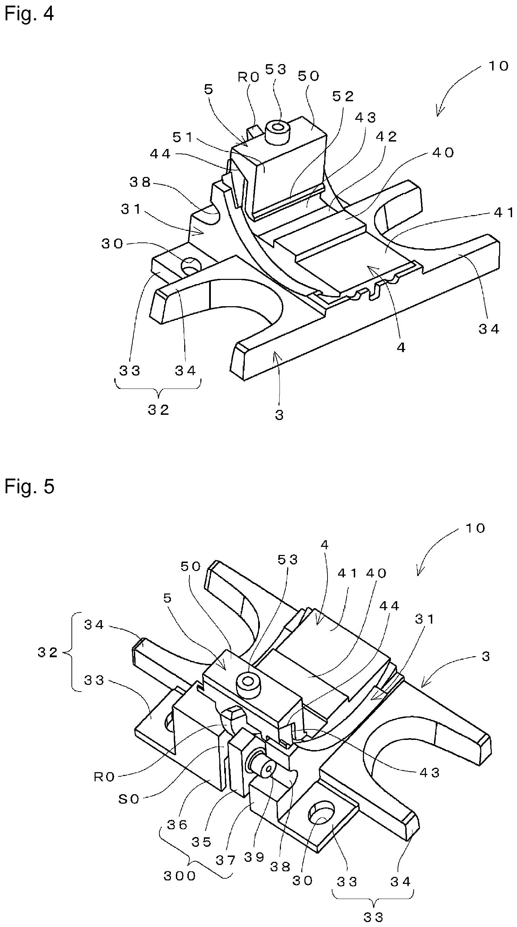

Figs. 4 to 6 show states when the above-described fixture 10 is observed from different angular directions, respectively. In the following description, the side where the housing 100 is supported is a front side. Moreover, a direction corresponding to the longitudinal direction when the housing 100 is supported is a vertical (up-and-down) direction, and a direction perpendicular to this is a width direction.

The fixture 10 of this embodiment is obtained by assembling a total of three components; a base member 3, a slide member 4, and an engagement member 5. The base member 3 has a configuration in which attachment parts 32 are continued above and below a support part 31 for supporting the slide member 4. The engagement member 5 is anchored on the front side of the slide member 4. Moreover, the slide member 4 supports the rear face of the housing 100, and the engagement member 5 makes contact, and engages with the one lateral face of the housing 100. This engagement allows the fixture 10 to be attached to the housing 100.

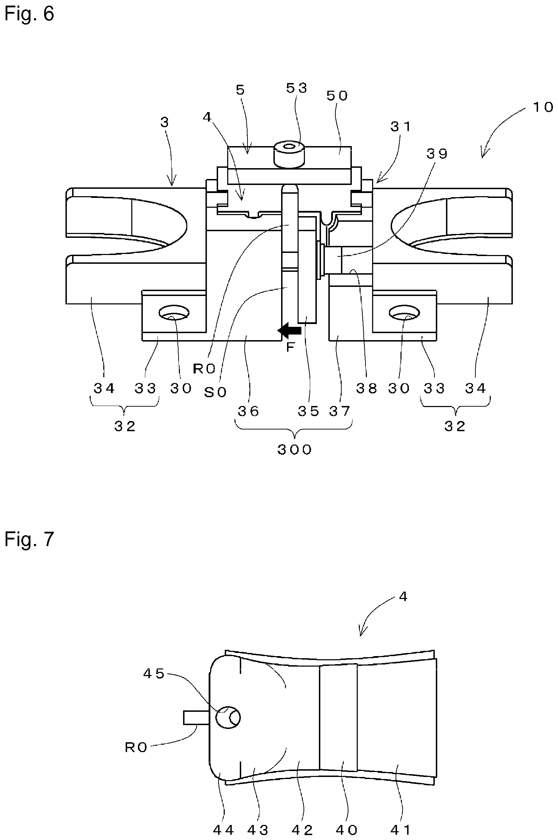

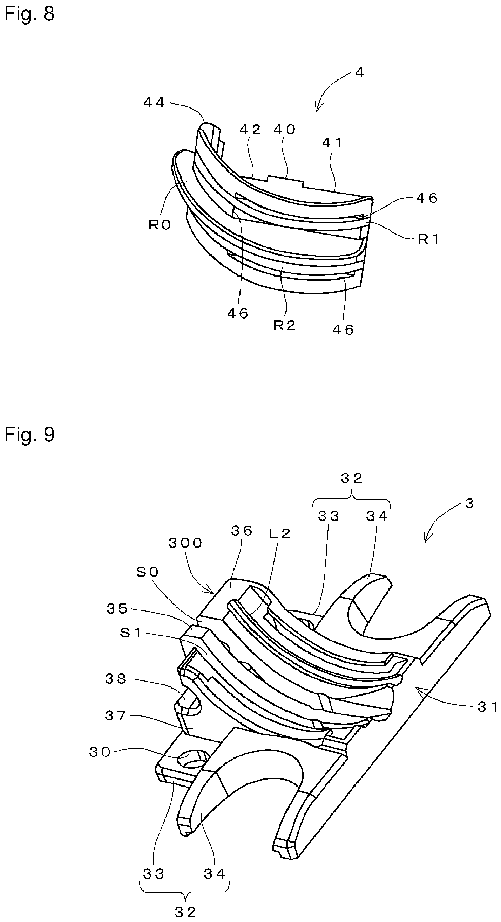

Fig. 7 shows a configuration of the front side of the slide member 4, and Fig. 8 shows a configuration of a back side of the slide member 4.

As shown in Fig. 7, and Figs. 4 and 5, on the front side of the slide member 4, paired flat faces 41, 42 located, interposing a protruding linear stage part 40 that protrudes on the front side, a rising part 43 that rises from the flat face 42 along the width direction, and an inclined face 44 connecting the rising part 43 and the back side are included. While the rising part 43 is inclined obliquely outward around a vicinity of the flat face 42, an inclination angle varies in a plurality of stages until the rising part 43 is finally in an almost vertically erect state. Moreover, in the inclined face 44, a screw hole 45 is formed along a direction toward a rear part.

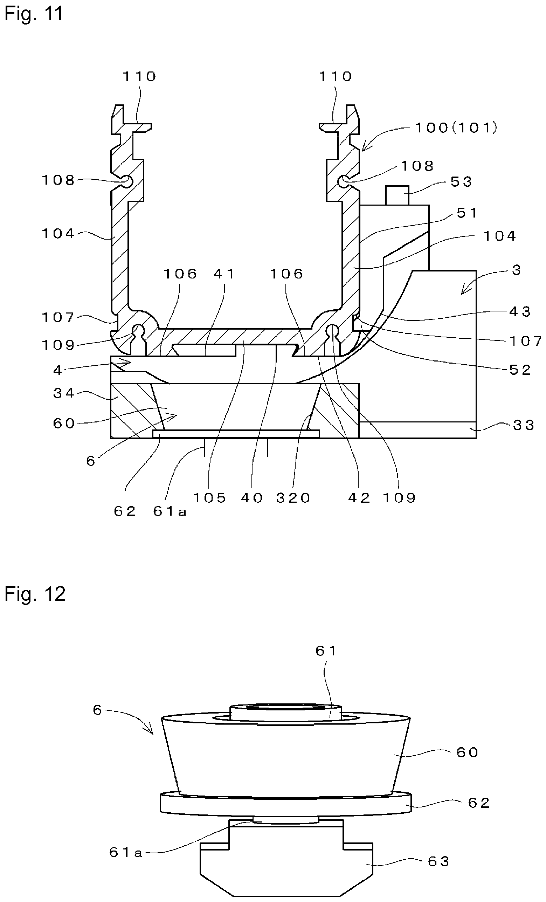

A width of a range including the stage part 40 and the flat faces 41, 42 corresponds to a width of the housing 100. Moreover, the stage part 40 is formed at a position abutting on protrusions 106 of a rear plate 105 described later of the housing 100. As shown in Fig. 11 described later, the stage part 40 rises obliquely outward to the flat face 42 on a side of the rising part 43, and vertically rises from the flat face 41 on the other side.

As shown in Fig. 8, the back side of the slide member 4 is formed so as to draw a successive circular arc curve along the width direction, and three ribs R0, R1, R2 are formed along this curve.

A gentle-curve portion (on the right side of Fig. 8) corresponds to the flat faces 41, 42 and the stage part 40 on the front side. On both sides of the respective ribs R0 to R2 in this portion, recessed parts 46 are formed.

A steep-curve portion (on the left side of Fig. 8) corresponds to the rising part 43. The central rib R0 of the three ribs R0, R1, R2 is larger in both width and height than the other two, and is projected from an end edge of the steep-curve portion to be exposed forward (corresponding to upward in Figs. 4 to 6) from the inclined face 44.

As shown in Figs. 4 and 5, a rear part of the engagement member 5 is formed into a shape corresponding to the rising part 43 and the inclined face 44 of the slide member 4, and a front face 50 is formed as a rectangular flat face. Moreover, a rectangular wall face 51 perpendicular to this front face 50 is continued to one lateral edge of the front face 50. At a base of this wall face 51, a hook part 52 is provided over an entire length.

In the front face 50 of the engagement member 5, a screw hole is formed along a direction toward the rear part (not shown). This screw hole penetrates the engagement member 5, and it overlaps the screw hole 45 of the slide member 4, when the rear part of the engagement member 5 is aligned with the rising part 43 and the inclined face 44 of the slide member 4. Tightening a screw 53 inserted into these screw holes allows the engagement member 5 to be linked with the slide member 4 in a state covering the rising part 43 and the inclined face 44.

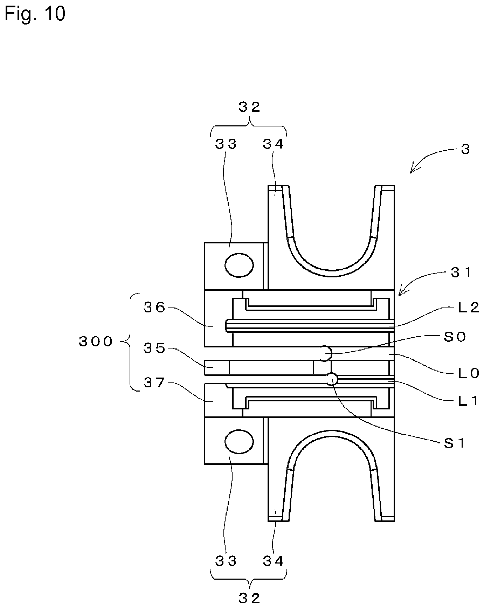

Figs. 9 and 10 show a configuration of the base member 3.

In a support part 31 of the base member 3, a left lateral part 300 in the figure (corresponding to a direction where the rising part 43 of the slide member 4 and the engagement member 5 are arranged) is formed high (hereinafter, this lateral part is referred to as an "erect part 300"), and a front side is also inclined in a circular arc shape so as to climb up toward an end edge of the erect part 300. An angle of this inclination matches the curve on the back side of the slide member 4.

In the support part 31, two slits S0, S1 are formed along the width direction. These slits S0, S1 are provided in a range from the end edge of the erect part 300 up to an intermediate position of a portion where the inclination becomes gentle. On a front side of the support part 31, depression parts L0, L1 extending to end edges on the opposite side are continued to these slits S0, S1, respectively. The slit S0 and the depression part L0 continued to the same guide the central rib R0 of the slide member 4, and the slit S1 and the depression L1 continued to the same guide the rib R1.

Furthermore, on the front side of the support part 31, a depression part L2 extending over an almost entire width is provided at a position on the opposite side of the slit S1 when seen from the slit S0. This depression part L2 guides the rib L2 of the slide member 4.

The erect part 300 of the support part 31 is divided into a thin piece 35 having a narrow width and sandwiched between the slits S0, S1, a part 36 opposed to the thin piece 35 with the slit S0 interposed (hereinafter, referred to as a "divided part 36), and a part 37 opposed to the thin piece 35 with the slit S1 interposed (hereinafter, referred to as a "divided part 37"). The thin piece 35 and the divided part 36 have predetermined thicknesses, and in these thick portions, screw holes (not shown) along a width direction of the slit S0 are formed.

The divided part 37 is not thick, and an upper portion of a lateral wall is gouged in a state curved inward to form a curved recessed part 38. As shown in Figs. 5 and 6, this recessed part 38 functions as a guide to insert the screw 39 into the screw hole of the thin piece 35, and supports a head portion of the inserted screw 39. This screw 39 reaches the screw hole of the divided part 36 through the screw hole of the thin piece 35, by which the thin piece 35 and the divided part 36 are linked.

The slide member 4 is installed so that the rising part 43 corresponds to a steep slope of the support part 31, and the range including the flat faces 41, 42 and the stage part 40 corresponds to a range where the inclination of the support part 31 is gentle with respect to the base member 3 having the above-described configuration. Thereby, the rib R0 is engaged with the depression part L0 and the slit S0, the rib R1 is engaged with the depression part L1 and the slit S1, and the rib R2 is engaged with the depression part L2, so that the slide member 4 is supported slidably along the inclination of the support part 31. Moreover, the ribs R0, R1 are fitted in the corresponding slits S0, S1, respectively, and the existence of recessed parts 46 provided on the back side of the slide member 4 makes the engagement between the ribs R0 to R2 and the depression parts L0 to L2 stable, which allows the slide member 4 to be supported stably on the support part 31.

As shown in Figs. 5 and 6, when the slide member 4 is installed on the support part 31, the projected portion of the central rib R0 is put into a state projected from a space (a leading end of the slit S0) between the respective thick portions of the thin piece 35 and the first divided part 36. Since the screw holes of the thin piece 35 and the divided part 36 are provided outside a range where the projected portion of this rib R0 rotates in accordance with the slide of the slide member 4 (closer to the lateral wall), the screw 39 can be tightened without being prevented by the rib R0. When this screw 39 is tightened, a tightening force deforms the thin piece 35, thereby bringing the thin piece 35 close to the slit S0 (in a direction of arrow F in Fig. 6), and sandwiching the rib R0 between the thin piece 35 and the divided part 36. This causes friction between the rib R0, and the thin piece 35 and the divided part 36, thereby restricting the rotation of the rib R0. Thus, a motion of the whole slide member 4 is restricted, which brings the slide member 4 into a state anchored to the support part 31 of the base member 3.

Fig. 11 shows a state where the above-described fixture 10 is attached to the housing 100, and a linkage state of the fixture 10 and the holdback 6. In Fig. 11, a direction perpendicular to a plane of paper corresponds to the longitudinal direction of the housing 100, and as to the housing 100, only cross-sectional shape of the frame 101 is shown. The light transmissive plate 103 on the front face is supported at both lateral edges by stage parts 110, 110 in the figure to thereby be anchored together with the caps 102, 102.

Reference numeral 104 in the figure denotes a lateral plate of the housing 100, and 105 denotes a rear plate of the housing 100. Depression parts 108, 109 along the longitudinal direction are provided below the respective stage parts 110 in the lateral plate 14, and in both lateral portions in the rear plate 105, respectively. At the both end positions of these depression parts 108, 109, screws (not shown) to anchor the caps 102 are inserted.

In each of the lateral plates 104, a depression part 107 along the longitudinal direction is also formed in portions close to the rear plate 105. These depression parts 107 are each formed into a shape in accordance with the hook part 52 of the engagement member 5.

In the rear plate 105 of the housing 100, the protrusions 106 are formed along inner edges of the respective depression parts 108, respectively. Inner wall portions of the respective protrusions 106, 106 are inclined in a state where a portion closer to a surface of the rear plate 105 is displaced outward. The inclination angle of the inner wall portions matches an inclined face of the stage part 40 of the slide member 4.

While the fixture 10 is attached to the housing 100 having the above-described configuration in a state where the three components 3, 4, 5 are linked, the screw 39 to fasten the thin piece 35 and the divided part 36 of the base member 3 is loosened so that the slide member 4 is slidable on the support part 31. Moreover, the screw 53 of the engagement member 5 is also tightened loosely in order to make the fitting of the hook part 52 in the depression part 107 easy and make a slide function of the fixture 10 described later effective.

In this state, the stage part 40 of the slide member 4 is aligned with one of the protrusions 106 of the rear plate 105, the wall face 51 of the engagement member 5 is aligned with the lateral plate 104 in the vicinity of this protrusion 109, and the hook part 52 is fitted into the depression part 107 of the relevant lateral plate 105, by which the fixture 10 is attached to the housing 100.

This stage is a state where the screw 53 to anchor the engagement member 5 is loosened and the hook part 52 slightly floats. Moreover, while the stage part 40 of the slide member 4 is in a state where the inclined wall face thereof abuts on the protrusion 106 on the side of the engagement member 5, and an upper face thereof makes contact with the surface of the rear plate 105, the stage part 40 is not sandwiched between the protrusions 106, 106 on both sides, and a sufficient loose space is produced between the protrusion 106 on the side apart from the rising part 43, and the stage part 40. Therefore, even if a pressing force along the longitudinal direction of the housing 100 is applied to the fixture 10, frictional forces between the hook part 52 and the depression part 107, and between the stage part 40 and the rear plate 105 are relatively small. Thus, with the protrusions 106 and the depression parts 107 as guides, the fixture 10 can be slid along the longitudinal direction of the housing 100.

On the other hand, when the screw 53 is tightened, a pressing force is applied to the hook part 52, from the front side to thereby press the hook part 52 to the depression part 107, so that coming-off of the hook part 52 from the depression part 107 and slide of the hook part 52 are restricted. Moreover, since the engagement member 5 and the slide member 4 are put into a completely anchored state, the slide member 4 cannot slide, either. This allows the fixture 10 to be anchored at a certain position of the housing 100.

The attachment parts 32, 32 located above and below the support part 31 of the slide member 4 each have two types of attachment pieces 33, 34 disposed side by side in the width direction. The one attachment piece 34 is a U-shaped plate body with a leading end thereof opened, and is located at a site behind the housing 100 when the housing 100 is supported by the fixture 10, as shown in Fig. 2. The fixture 10 is linked with the holdback 6 through this attachment piece 34.

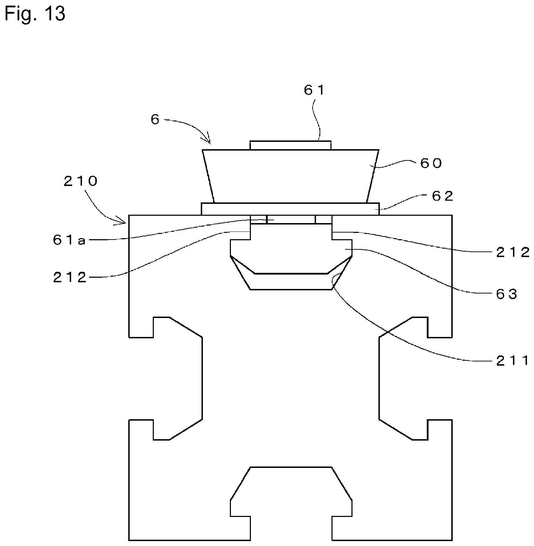

Fig. 12 shows a configuration of the above-described holdback 6. Fig. 13 shows an attachment state of the holdback 6 to the fame 210 when seen from one end edge side of the frame 210.

The holdback 6 has a configuration in which a slide nut 63 is linked with a threaded shaft 61a of an anchoring member 60 with a washer 62 interposed, a locking screw 61 being provided integrally with the anchoring member 60. An outer shape of the anchoring member 60 is a circular truncated cone shape, and a side thereof where a diameter becomes smaller is opposed to the washer 62.

A size in a height direction of the slide nut 63 is set smaller than a depth of the depression of the rail 211. Moreover, portions on both sides of an upper face of the slide nut 63 to make contact with guide parts 212, 212 in an upper portion of the rail 211 are lowered by a height in accordance with a thickness of the guide parts 212, 212.

The slide nut 63 is inserted into the depression of the rail 211 in a state where the screw 61 is loosened, and is moved to a desired position to tighten the screw 61, by which the above-described fixture 6 is anchored to the rail 211.

Referring back to Figs. 4 to 6 and Fig. 11, and Fig. 14, a configuration of the attachment piece 34 of the fixture and an anchoring method will be described.

While the leading end portions of the U-shaped curved portion of the attachment piece 34 are formed so as to have enough width to insert the washer 62 under the anchoring member 60 into the leading end portions, a width of the curved portion becomes narrower as it becomes closer to a base end portion (refers to a portion continued to the support part 31). However, as shown in Fig. 11, in a bottom of the base end portion, enough width to insert the washer 62 is secured, and a wall face 320 above this is an inclined face that is displaced inward as it goes downward in accordance with an outer circumferential face of the anchoring member 60.

With the above-described configuration, the leading end portions of the attachment piece 34 are aligned with the anchoring member 60 and the washer 62 of the holdback 6 anchored to the rail 211 to push the attachment piece 34, by which the anchoring member 60 and the washer 62 can be fitted in the base end portion of the curved portion of the attachment piece 34, and the attachment piece 34 can be anchored to the holdback 6.

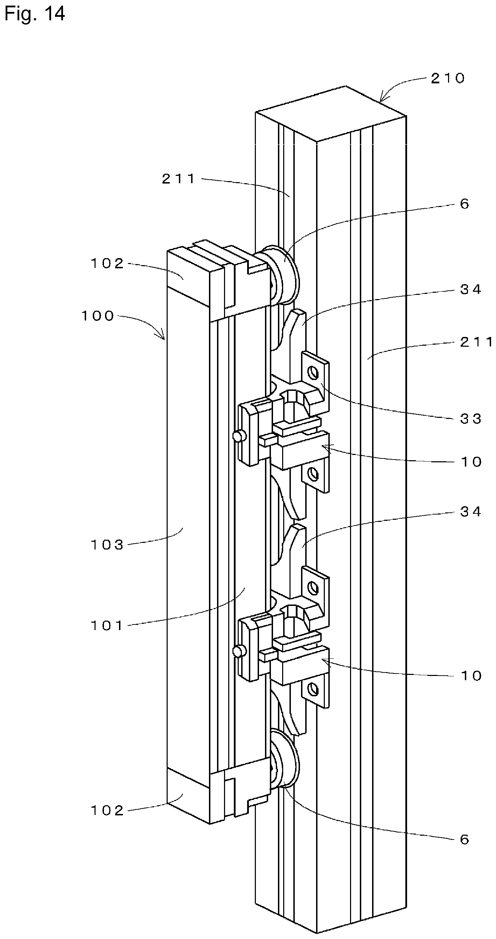

Making use of the above-described function, a worker anchors the two holdbacks 6, 6 to the rail 211, aligns, with the rail 211, the housing 100 to which the two fixtures 10, 10 are attached, and anchors the attachment piece 34 of each of the fixtures 10, 10 to the corresponding holdback 6. At this time, as shown in Fig. 14, the respective fixtures 10, 10 are attached in a state where they are brought closer to a central portion of the housing 100, by which when the housing 100 is aligned with the rail 211, the upper fixture 10 is located below the upper holdback 6, and the lower fixture 10 is located above the lower holdback 6.

Thereafter, using the slide function of the fixture 10, the worker slides one of the fixtures 10 (e.g., the lower fixture 10) toward the corresponding holdback 6. Furthermore, the fixture 10 is slid until the anchoring member 60 and the washer 62 of the holdback 6 are fitted in the base end portion of the attachment piece 34, by which the fixture 10 can be anchored to the holdback 6. Further, the screw 53 of the engagement member 5 is tightened, by which the hook part 52 is pushed to the depression part 107, thereby putting the fixture 10 into an unslidable state. This puts the fixture 10 into a state robustly anchored to the holdback 6, so that the fixture 10 can be prevented from coming off the holdback 6.

For the other fixture 10, the worker similarly slides the fixture 10 until the state is brought where the anchoring member 60 and the washer 62 of the corresponding holdback 6 are fitted in the base end portion of the holdback 34, and tightens the screw of the engagement member 5. This robustly anchors this fixture 10 to the holdback 6 as well.

In this manner, the respective fixtures 10, 10 are completely anchored to the holdbacks 6, 6, by which the housing 100 is supported in a stable state to the rail 211. After this, a posture of the housing 100 is adjusted to align respective optical axes.

When for this adjustment, the worker pushes or slightly pulls the lateral face of the housing 100 or a lateral portion of the fixture 10, the slide member 4 slides along the inclined face of the base member 3, and in accordance with this, the housing 100 rotates around an axis along the longitudinal direction thereof. Making use of this, the worker adjusts the posture of the housing 100, and when the adjustment is completed, the worker tightens the screw 39 to link the thin piece 35 and the divided part 36. This brings about a state where the slide member 4 is anchored and the housing 100 does not rotate, and thereafter, the housing 100 is maintained in the adjusted posture.

As described above, in this embodiment, the fixture 10 is attached to the housing 100 slidably, and the fixture 10 is slid until the fixture 10 is engaged with the corresponding holdback 6, and then, the screw 53 is tightened, by which the fixture 10 can be anchored. In addition, since the attachment pieces 34 are provided at two positions in an opposition relation in the longitudinal direction of the housing 100 with the support part 31 of the fixture 10 interposed, whether the corresponding holdback 6 is disposed above or below the fixture 10, the fixture 10 can be moved in the direction where it approaches the holdback 6 to link the fixture 10 with the holdback 6. Thus, the attachment of the housing 100 to the rail 211 can be easily performed.

Moreover, since a height of the housing 100 is adjusted to anchor the housing 100 without loosening the holdback 6 anchored to the rail 211, there is no risk that the holdback 6 comes off the rail 211. As to the fixture 10 as well, since the ribs R0 to R2 are provided in a back face of the slide member 4 and the slide member 4 is supported stably by the slits S0, S1 of the base member 3 and the recessed parts 46 of the slide member 4, there is no risk that the slide member 4 comes off the base member 3 while the fixture 10 is slid or while it is linked with the holdback 6.

Furthermore, in this embodiment, since the function of restricting the rotation and anchoring the slide member 4 is added to the base member 3 which supports the slide member 4 attached to the housing 100 rotatably around the axis along the longitudinal direction of the housing 100, the components are reduced in number, which can suppress costs.

In the case where the three or more fixtures 10 are attached to the housing 100 as well, similarly, the same number of holdbacks 6 as that of the fixtures 10 are anchored to the rail 211, and the respective fixtures 10 are slid until they are engaged with the corresponding holdbacks 6, by which the respective fixtures 10 can be linked with the corresponding holdbacks 6.

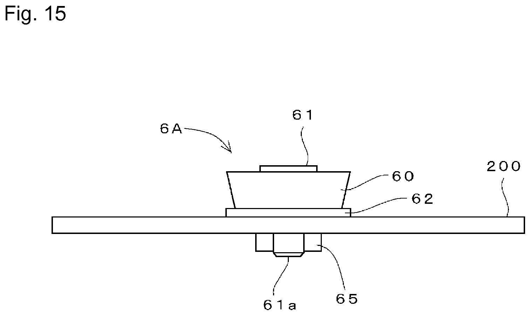

In the other attachment piece 33 provided in each of the attachment parts 32 of the fixture 10, a screw hole 30 is provided. As shown in Figs. 2 and 14, when the fixture 10 is attached to the housing 100, these attachment pieces 33 are exposed lateral to the housing together with the erect part 300 of the base member 3 and the rib R0, and thus, in the case where an attachment object of the housing 100 is a plain plate wall body, screws 120 are inserted into the screw holes 30 to screw the fixture on the wall body, by which the fixture 10 and the housing 100 supported by this can be anchored to the wall body. However, in the case of the attachment to the wall body as well, use of a holdback 6A having the following configuration shown in Fig. 15 enables an attachment method similar to that of the above-described embodiment to be carried out.

Fig. 15 shows a state where the holdback 6A is anchored to a wall body 200.

This holdback 6A is obtained by combining the anchoring member 60 and the washer 62 having the same configurations as those of the holdback 6 in the previous embodiment with a hexagon nut, the threaded shaft 61a of the locking screw 61 of the anchoring member 60 is inserted into a screw hole (not shown) provided in the wall body 200, and a nut 65 is inserted onto the threaded shaft 61a projected on a back side to tighten the nut 65, by which the holdback 6A is anchored to the wall body 200.

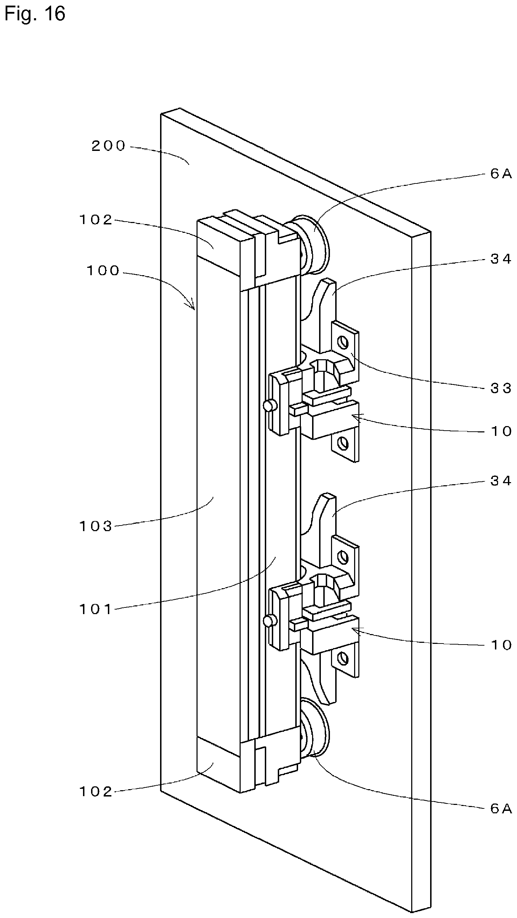

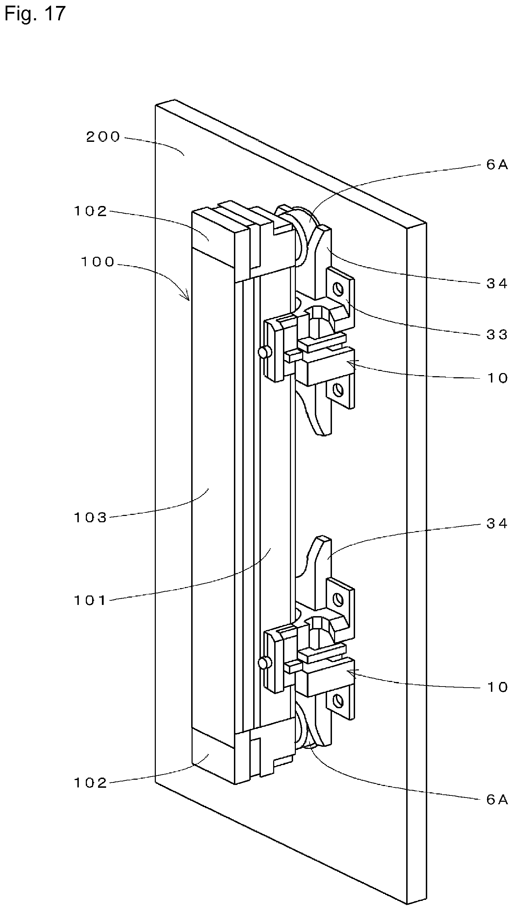

Figs. 16 and 17 show an example of attaching the housing 100 to the wall body 200, using the above-described holdback 6A.

The paired holdbacks 6A, 6A are anchored to the wall body 200 by the above-described method. The paired fixtures 10, 10 corresponding to these holdbacks 6A, 6A are attached to the housing 100, and both of them are attached to sites closer to the central portion of the housing 100 so as to be misaligned upward and downward with respect to the corresponding holdbacks 6A, 6A.

At the time of attachment, first, as shown in Fig. 16, the housing 100 with the fixtures 10, 10 attached thereto is aligned with the wall body 200. The respective fixtures 10, 10 are sequentially slid to the corresponding holdbacks 6A, 6A to link the attachment pieces 34 with the fixture tools 6A, and the screws 53 of the engagement members 5 are tightened, by which the respective fixtures 10, 10 are anchored to the holdbacks 6A, 6A. This allows the housing 100 to be attached at a set position of the wall body 200.

While in the respective above-described embodiments, the attachment piece 34 has the shape in which the leading end thereof is opened, and the slide of the fixture 10 allows the holdback 6 or 6A to be inserted into the curved portion of the attachment piece 34 and guided to the base end portion, the configuration of the attachment piece 34 is not limited thereto. Moreover, a cross-sectional shape of the anchoring member 60 of the holdback 6 or 6A is not limited to a circle. For example, the attachment piece 34 may have a U shape or a V shape, and the anchoring member having a shape fitting in this may be used to configure the holdback 6 or 6A.

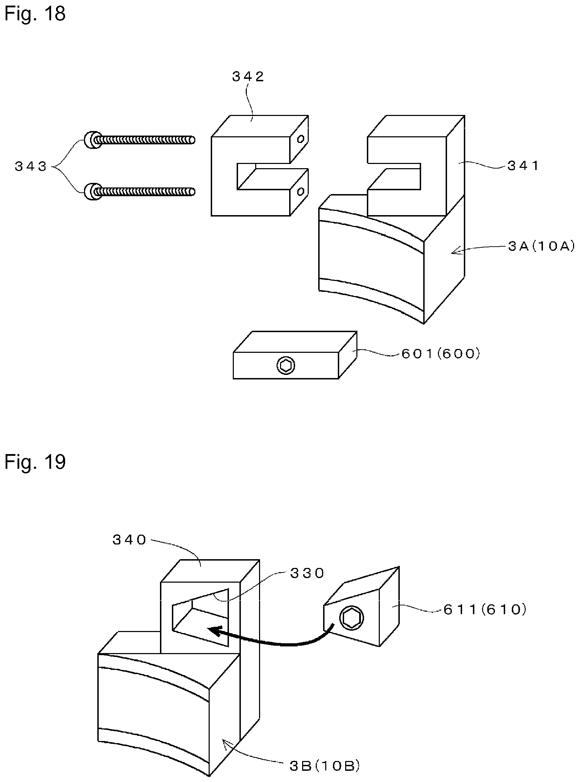

Next, Figs. 18 and 19 schematically show other configurations of the attachment piece 34 of the fixture 10, and the holdback 6. In these figures, while fixtures are denoted by 10A, 10B, the illustration is limited to an attachment piece. Configurations of main portions not shown of the respective fixtures 10A, 10B are similar to those of the fixture 10 of the previous embodiment.

A base member 3A of the fixture 10A of an example in Fig. 18 is provided with a U-shaped attachment piece half body 341. Moreover, a second attachment piece half body 342 having the same shape as that of the attachment piece half body 341, and paired screws 343, 343 are prepared in a state separate from the base member 3A. When the respective attachment piece half bodies 341, 342 are linked by the screws 343, 343 in a state where respective open end edges thereof abut on each other, an attachment piece with a hole portion having a rectangular cross section is completed.

A holdback 600 of this embodiment is made up of a rectangular parallelepiped anchoring member 601, a nut (not shown) and the like in accordance with the hole portion formed by the linkage of the respective attachment piece half bodies 341, 342. This holdback 600 is beforehand anchored to a support member such as a rail, a wall body and the like as in the previous embodiment.

The fixture 10A is attached to the housing 100 in a state where the attachment piece half body 342 is not linked. This housing 100 is aligned with the support member, the fixture 10A is slid toward the holdback 600 to fit the attachment piece half body 341 in the anchoring member 601, and screw the attachment piece half body 342 to the attachment piece half body 341, by which the fixture 10A is linked with the holdback 600.

The fixture 10B of an example of Fig. 19 is used for anchoring the housing to the rail member, and a base member 3B is provided with the attachment piece 340 formed with a hole part 330 having a trapezoidal cross section. Moreover, a holdback 610 of this embodiment is made up of an anchoring member 611 having a similar shape to that of the hole part 330, a first-in nut (not shown) with a stopper function and the like.

In this embodiment, the first-in nut is beforehand anchored to a predetermined position of the rail 211, and the housing 100 to which the fixture 10B is attached is aligned with the rail 211, and the fixture 10B is slid until the hole part 330 of the attachment piece 340 comes to correspond to the nut. Then, the anchoring member 611 is press-fitted in the hole part 330 to be linked with the nut, and the anchoring member 611 and the nut are screwed together, by which the fixture 10B is linked with the holdback 610.

The fixtures 10A, 10B of the examples in Figs. 18, 19 also each have the slide member 4 and the engagement member 5 having similar forms to those of the fixture 10. However, in these examples, since an entire circumference of the holdback 600 or 610 is surrounded by the attachment piece, the state where the fixture 10A or 10B is linked with the holdback 600 or 610 can be maintained without tightening the screw 53 of the engagement member 5. However, in order to make the support of the housing 100 by the fixture 10 stable, the screw 53 is desirably tightened at a time point when the linkage to the holdback 600 or 610 is completed.

### DESCRIPTION OF SYMBOLS

- 100: housing
- 10: fixture
- 1: projector
- 2: optical receiver
- 3: base member
- 4: slide member
- 5: engagement member
- 6: holdback
- 31: support part
- 40: stage part
- 43: rising part
- 52: hook part
- 53: screw
- 104: lateral plate
- 105: rear plate
- 106: protrusion
- 107: depression part

## Claims

1. An anchoring structure of a multiple-optical-axis photoelectric sensor for anchoring, to a support member (211), a columnar housing (100) making up a body of each of a projector (1) and an optical receiver (2) of the multiple-optical-axis photoelectric sensor, the anchoring structure comprising:
a fixture (10) to be attached to the housing (100) in a state supporting the rear face (105) and one lateral face (104) of the housing (100); a first guide part (107) provided along a lateral edge on a rear face side of the lateral face (104) of the housing (100), the lateral face (104) being supported by the fixture (10); a second guide part (106) provided along a lateral edge of the rear face (105) of the housing (100) closer to the lateral face (104) having the first guide part (107); and a holdback (6) to be anchored to the support member (211),
wherein an engagement part (52) to be engaged with the first guide part (107) is provided at a portion of the fixture (10) supporting the one lateral face (104) of the housing (100),
at a portion of the fixture (10) supporting the rear face (105) of the housing (100), a protruding linear stage part (40) is provided, the linear stage part (40) extending along a longitudinal direction of the housing (100) supported by this portion and abutting on the second guide part (106), and at positions opposed along the longitudinal direction of the housing (100) with the portion supporting the rear face (105) of the housing (100) interposed, attachment pieces (34) to be respectively engaged with the holdback (6) are provided, and
the engagement part (52) is engaged with the first guide part (107) of the housing (100), and the linear stage part (40) is caused to abut on the second guide part (106) of the housing (100), by which the fixture (10) is slidably attached to the housing (100) along the longitudinal direction.

2. The anchoring structure of the multiple-optical-axis photoelectric sensor according to claim 1, wherein the first guide part (107) is a depression extending along the lateral edge of the lateral face (104) of the housing (100), and the engagement part (52) is a hook part having a shape fitting in the depression.

3. The anchoring structure of the multiple-optical-axis photoelectric sensor according to claim 1, wherein the second guide part (106) is a protrusion extending along the lateral edge of the rear face (105) of the housing (100) closer to the lateral face (104) having the first guide part (107), and the linear stage part (40) abuts on an inner wall face of this protrusion.

4. The anchoring structure of the multiple-optical-axis photoelectric sensor according to claim 1, wherein a screw hole (30) toward the rear face side is formed in the front face of the portion of the fixture (10) supporting the one lateral face (104) of the housing (100), and a screw (53) inserted into this screw hole (30) is tightened, by which the engagement part (52) is pushed to the first guide part (107) to restrict movement of the engagement part (52).

5. The anchoring structure of the multiple-optical-axis photoelectric sensor according to claim 1,
wherein the holdback (6) has an anchoring member (60) exposed to a surface of the support member (211), and a nut (65) to anchor this anchoring member (60) to the support member (211),
each of the attachment pieces (34) of the fixture (10) has an open portion to insert the anchoring member (60) at a leading end thereof, and sandwiches the anchoring member (60) inserted from this open portion to support the same, and
in the front face of the portion of the fixture (10) supporting the one lateral face (104) of the housing (100), a screw hole (30) toward the rear face side is formed, and a screw (53) inserted into this screw hole (30) is tightened, by which the engagement part (52) is pushed to the first guide part (107) to restrict movement of the engagement part (52).

6. The anchoring structure of the multiple-optical-axis photoelectric sensor according to claim 4,
wherein the fixture (10) has a base member (3) including the attachment pieces (34), a support member (211) including the portion supporting the rear face (105) of the housing (100), and an engagement member (5) including the engagement part (52), and
at a portion where the support member (211) supports the rear face (105) of the housing (100), a rising part (43) that rises outside the one lateral face (104) of the housing (100) supported by the relevant portion is continued, the engagement member (5) is linked with the support member (211) through the screw (53) in a state where the engagement member (5) covers a front side of the rising part (43).

## Patentansprüche

1. Verankerungsstruktur eines photoelektrischen Sensors mit mehreren optischen Achsen zur Verankerung eines säulenförmigen Gehäuses (100), das jeweils einen Körper eines Projektors (1) und eines optischen Empfängers (2) des photoelektrischen Sensors mit mehreren optischen Achsen bildet, an einem Tragelement (211), wobei die Verankerungsstruktur umfasst:
eine Befestigung (10) zur Befestigung am Gehäuse (100) in einem Zustand, in dem sie die Rückfläche (105) und eine Seitenfläche (104) des Gehäuses (100) hält;
ein erstes Führungsteil (107), das entlang einer seitlichen Kante auf einer Rückflächenseite der Seitenfläche (104) des Gehäuses (100) angebracht ist, wobei die Seitenfläche (104) von der Befestigung (10) gehalten wird;
ein zweites Führungsteil (106), das entlang einer seitlichen Kante der Rückfläche (105) des Gehäuses (100) näher an der Seitenfläche (104) mit dem ersten Führungsteil (107) angebracht ist; und
ein am Tragelement (211) zu verankerndes Rückhalteelement (6),
wobei ein mit dem ersten Führungsteil (107) zu verbindendes Verbindungsteil (52) an einem Abschnitt der Befestigung (10) angebracht ist, der die eine Seitenfläche (104) des Gehäuses (100) hält,
an einem die Rückfläche (105) des Gehäuses (100) haltenden Abschnitt der Befestigung (10) ein vorstehendes lineares Tischteil (40) angebracht ist, das Tischteil (40) sich entlang einer Längsrichtung des von diesem Abschnitt gehaltenen und an dem zweiten Führungsteil (106) anliegenden Gehäuses (100) erstreckt, und an in der Längsrichtung des Gehäuses (100) einander gegenüberliegenden Positionen, zwischen denen sich der die Rückfläche (105) des Gehäuses (100) haltende Abschnitt befindet, Befestigungsstücke (34) zur jeweiligen Verbindung mit dem Rückhalteelement (6) angebracht sind, und das Verbindungsteil (52) mit dem ersten Führungsteil (107) des Gehäuses (100) verbunden ist und das lineare Tischteil (40) zum Anliegen an dem zweiten Führungsteil (106) des Gehäuses (100) gebracht ist, wodurch die Befestigung (10) am Gehäuse (100) entlang der Längsrichtung verschiebbar befestigt ist.

2. Verankerungsstruktur eines photoelektrischen Sensors mit mehreren optischen Achsen nach Anspruch 1, wobei das erste Führungsteil (107) eine Vertiefung ist, die sich entlang der Seitenkante der Seitenfläche (104) des Gehäuses (100) erstreckt, und das Verbindungsteil (52) ein Hakenteil ist, das eine in die Vertiefung passende Form hat.

3. Verankerungsstruktur eines photoelektrischen Sensors mit mehreren optischen Achsen nach Anspruch 1, wobei das zweite Führungsteil (106) ein Vorsprung ist, der sich entlang der der Seitenfläche (104) mit dem ersten Führungsteil (107) näheren Seitenkante der Rückfläche (105) des Gehäuses (100) erstreckt, und das lineare Tischteil (40) an einer inneren Wandfläche dieses Vorsprungs anliegt.

4. Verankerungsstruktur eines photoelektrischen Sensors mit mehreren optischen Achsen nach Anspruch 1, wobei ein Schraubenloch (30) in der Vorderfläche des Abschnitts der Befestigung (10), der die eine Seitenfläche (104) des Gehäuses (100) hält, in Richtung zur Rückflächenseite ausgebildet ist, und eine in dieses Schraubenloch (30) eingesetzte Schraube (53) angezogen wird, wodurch das Verbindungsteil (52) an das erste Führungsteil (107) gedrückt wird, um die Bewegung des Verbindungsteils (52) zu begrenzen.

5. Verankerungsstruktur eines photoelektrischen Sensors mit mehreren optischen Achsen nach Anspruch 1,
wobei das Rückhalteelement (6) ein Verankerungselement (60), das zu einer Fläche des Tragelements (211) offenliegt, und eine Mutter (65) zur Verankerung dieses Verankerungselements (60) am Tragelement (211) hat,
jedes der Befestigungsstücke (34) der Befestigung (10) einen offenen Abschnitt hat, um an seinem führenden Ende das Verankerungselement (60) hineinzusetzen, und das an diesem offenen Abschnitt eingesetzte Verankerungselement (60) klemmt, um es zu halten, und
ein Schraubenloch (30) in der Vorderfläche des Abschnitts der Befestigung (10), der die eine Seitenfläche (104) des Gehäuses (100) hält, in Richtung zur Rückflächenseite ausgebildet ist, und eine in dieses Schraubenloch (30) eingesetzte Schraube (53) angezogen wird, wodurch das Verbindungsteil (52) an das erste Führungsteil (107) gedrückt wird um die Bewegung des Verbindungsteils (52) zu begrenzen.

6. Verankerungsstruktur eines photoelektrischen Sensors mit mehreren optischen Achsen nach Anspruch 4,
wobei die Befestigung (10) ein Grundelement (3), das die Befestigungsstücke (34) umfasst, ein Tragelement (211), das den die Rückfläche (105) des Gehäuses (100) haltenden Abschnitt umfasst, und ein Verbindungselement (5), das das Verbindungsteil (52) umfasst, hat, und
an einem Abschnitt, an dem das Tragelement (211) die Rückfläche (105) des Gehäuses (100) hält, ein geneigtes Teil (43), dessen Neigung außerhalb der vom relevanten Abschnitt gehaltenen einen Seitenfläche (104) des Gehäuses (100) verläuft, fortgesetzt ist, das Verbindungselement (5) durch die Schraube (53) mit dem Tragelement (211) verbunden ist in einem Zustand, in dem das Verbindungselement (5) eine Vorderseite des geneigten Teils (43) bedeckt.

## Revendications

1. Structure d'ancrage d'un capteur photoélectrique à axes optiques multiples pour ancrer, à un élément de support (211), un boîtier en colonne (100) constituant un corps de chacun d'un projecteur (1) et d'un récepteur optique (2) du capteur photoélectrique à axes optiques multiples, la structure d'ancrage comprenant :
un dispositif de fixation (10) à attacher au boîtier (100) dans un état supportant la face arrière (105) et une face latérale (104) du boîtier (100) ; une première partie de guidage (107) étant prévue le long d'un bord latéral sur un côté de face arrière de la face latérale (104) du boîtier (100), la face latérale (104) étant supportée par le dispositif de fixation (10) ; une deuxième partie de guidage (106) étant prévue le long d'un bord latéral de la face arrière (105) du boîtier (100) plus proche de la face latérale (104) ayant la première partie de guidage (107) ; et un dispositif de retenue (6) à ancrer à l'élément de support (211),
dans laquelle une partie de mise en prise (52) à mettre en prise avec la première partie de guidage (107) est prévue au niveau d'une partie du dispositif de fixation (10) supportant ladite face latérale (104) du boîtier (100),
au niveau d'une partie du dispositif de fixation (10) supportant la face arrière (105) du boîtier (100) est prévue une partie de platine linéaire saillante (40), la partie de platine linéaire (40) s'étendant le long d'une direction longitudinale du boîtier (100) supportée par cette partie et venant en butée sur la deuxième partie de guidage (106), et au niveau de positions opposées le long de la direction longitudinale du boîtier (100) avec la partie supportant la face arrière (105) du boîtier (100) sont prévues des parties d'attache (34), interposées, à mettre en prise respectivement avec le dispositif de retenue (6), et
la partie de mise en prise (52) est mise en prise avec la première partie de guidage (107) du boîtier (100), et la partie de platine linéaire (40) est amenée à venir en butée sur la deuxième partie de guidage (106) du boîtier (100), ce par quoi le dispositif de fixation (10) est attaché de manière coulissante au boîtier (100) le long de la direction longitudinale.

2. Structure d'ancrage du capteur photoélectrique à axes optiques multiples selon la revendication 1, dans laquelle la première partie de guidage (107) est une dépression s'étendant le long du bord latéral de la face latérale (104) du boîtier (100), et la partie de mise en prise (52) est une partie en crochet ayant une forme s'adaptant dans la dépression.

3. Structure d'ancrage du capteur photoélectrique à axes optiques multiples selon la revendication 1, dans laquelle la deuxième partie de guidage (106) est une saillie s'étendant le long du bord latéral de la face arrière (105) du boîtier (100) plus proche de la face latérale (104) ayant la première partie de guidage (107), et la partie de platine linéaire (40) vient en butée sur une face de paroi interne de cette saillie.

4. Structure d'ancrage du capteur photoélectrique à axes optiques multiples selon la revendication 1, dans laquelle un trou de vis (30) vers le côté de face arrière est formé dans la face avant de la partie du dispositif de fixation (10) supportant ladite face latérale (104) du boîtier (100), et une vis (53) insérée dans ce trou de vis (30) est serrée, ce par quoi la partie de mise en prise (52) est poussée vers la première partie de guidage (107) pour restreindre le mouvement de la partie de mise en prise (52).

5. Structure d'ancrage du capteur photoélectrique à axes optiques multiples selon la revendication 1,
dans laquelle le dispositif de retenue (6) a un élément d'ancrage (60) exposé à une surface de l'élément de support (211), et un écrou (65) pour ancrer cet élément d'ancrage (60) à l'élément de support (211),
chacune des parties d'attache (34) du dispositif de fixation (10) a une partie ouverte pour insérer l'élément d'ancrage (60) au niveau d'une extrémité avant de celui-ci, et prend en sandwich l'élément d'ancrage (60) inséré à partir de cette partie ouverte pour le supporter, et
dans la face avant de la partie du dispositif de fixation (10) supportant ladite face latérale (104) du boîtier (100), un trou de vis (30) vers le côté de face arrière est formé, et une vis (53) insérée dans ce trou de vis (30) est serrée, ce par quoi la partie de mise en prise (52) est poussée vers la première partie de guidage (107) pour restreindre le mouvement de la partie de mise en prise (52).

6. Structure d'ancrage du capteur photoélectrique à axes optiques multiples selon la revendication 4,
dans laquelle le dispositif de fixation (10) a un élément de base (3) incluant les parties d'attache (34), un élément de support (211) incluant la partie supportant la face arrière (105) du boîtier (100), et un élément de mise en prise (5) incluant la partie de mise en prise (52), et
au niveau d'une partie où l'élément de support (211) supporte la face arrière (105) du boîtier (100), une partie montante (43) qui s'élève à l'extérieur de ladite face latérale (104) du boîtier (100) supportée par la partie concernée se poursuit, l'élément de mise en prise (5) est relié à l'élément de support (211) par la vis (53) dans un état où l'élément de mise en prise (5) recouvre un côté avant de la partie montante (43).
